# EUROPÄISCHE PATENTSCHRIFT

(11) **EP 3 846 989 B1**
(45) Veröffentlichungstag und Bekanntmachung des Hinweises auf die Patenterteilung: **28.02.2024**
(21) Anmeldenummer: 19765673.9
(22) Anmeldetag: 03.09.2019
(51) Int. Cl.: B28D 7/00, B23B 49/00, B25H 1/00, B25H 7/04, G01C 15/10, B23Q 3/18, B23Q 16/12

(54) **SENKLOT ZUR AUSRICHTUNG EINER EINE WELLE UND EINE BOHRKRONE AUFWEISENDE KERNBOHRMASCHINE**
PLUMB BOB FOR ORIENTING A CORE DRILLING MACHINE HAVING A SHAFT AND A CORE BIT
FIL À PLOMB DESTINÉ À DIRIGER UNE CAROTTEUSE COMPRENANT UN ARBRE ET UNE COURONNE DE SONDAGE

(30) Priorität: 07.09.2018 CH 10592018
(43) Veröffentlichungstag der Anmeldung: 14.07.2021
(73) Patentinhaber: Fidan, Adnan, 86356 Neusäss (DE)
(72) Erfinder: FIDAN, Adnan, 86165 Augsburg (DE)
(74) Vertreter: Swisspat Riederer Hasler Patentanwälte AG
(86) Internationale Anmeldenummer: PCT/EP2019/073485
(87) Internationale Veröffentlichungsnummer: WO 2020/048999

(56) Entgegenhaltungen:
- EP-A1- 3 028 796
- DE-U1- 29 515 127
- DE-U1- 29 824 197
- JP-A- H09 304 076
- US-A- 880 387
- US-B1- 6 397 484

## Beschreibung

### Gebiet der Erfindung

Die Erfindung betrifft ein Senklot zur Ausrichtung einer eine Welle und eine Bohrkrone aufweisende Kernbohrmaschine gemäss Oberbegriff des Anspruchs 1.

### Stand der Technik

Aus dem der Technik sind Senklote mit einem Lotkörper und einer Lotschnur bekannt, welche Senklote eine Laservorrichtung integriert haben. Die Laservorrichtung ist in dem Lotkörper aufgenommen. Die Laservorrichtung ist in Hängerichtung des Senklotes nach unten ausgerichtet, sodass der Laserstrahl als Verlängerung der Lotschnur in einer Flucht mit dieser verläuft und aus der Lotspitze austritt. Der Laserstrahl wirkt als Lichtzeiger. Der Laserstrahl überbrückt die Distanz zu dem Messpunkt, zu dem das Lot gefällt wird. Dadurch kann die Lotschnur verkürzt werden. Dies hat den Vorteil, dass die verkürzte Lotschnur eine reduzierte Angriffsfläche für Wind bietet und sich das Senklot durch die verkürzte Lotschnur rascher auspendelt als herkömmliche Senklote.

Solche Senklote werden unter anderem dazu benutzt, Werkzeuge in die Senkrechte auszurichten bzw. zu justieren. Für diese Anwendung haben sich Senklote, auch wenn sie eine Laservorrichtung integriert haben, jedoch als unpraktisch und unpräzise herausgestellt.

In der DE 298 24 197 U1 ist ein Laserhängelot offenbart. Das Hängelot besteht aus einem Lotkörper und aus einer mit dem Lotkörper verbundenen Lotschnur. Der Lotkörper ist mit einer Laserlichtbaugruppe versehen, um die Lotschnur möglichst kurz ausführen zu können. Dadurch bietet die Laserschnur nur einen geringen Windwiderstand.

EP 3 028 796 A1 ist eine Positionierhilfe für eine Kernbohrmaschine beschrieben. Die Positionierhilfe weist eine Lichtquelle zur Erzeugung eines Zentriermusters auf einem Werkstück auf. Die Positionierhilfe ist lösbar und zentriert an der Kernbohrmaschine befestigt. Bevorzugt ist die Lichtquelle ein Laserpointer, der an einem Zentrierstift lösbar befestigt ist.

### Aufgabe der Erfindung

Aufgabe der vorliegenden Erfindung ist es ein Senklot mit einer Laservorrichtung zu schaffen, bei welchem die Befestigung des Senklotes an einer Kernbohrmaschine verbessert ist insbesondere, wenn fluchtende Bohrungen für Steigleitungen herzustellen sind.

### Beschreibung

Das Senklot umfasst eine Haltevorrichtung, welche Haltevorrichtung mit dem Auspendelmittel verbunden ist und mit welcher Haltevorrichtung das Senklot an der Welle der Kernbohrmaschine anstatt der Bohrkrone befestigbar ist. Das Senklot ermöglicht es mit der Kernbormaschine hergestellte Bohrungen, insbesondere übereinanderliegende Boden- bzw. Deckendurchbrüche in einer fluchtenden Linie herzustellen. Die Laservorrichtung zeigt daher genau die Bohrmittelpunkte an, welche zu wählen sind, damit zwei übereinander liegende mit der Kernbohrmaschine gebohrte Deckendurchbrüche exakt in einer Vertikalen liegen. Denkbar ist es auch das Senklot dazu zu verwenden, um Mauerdurchbrüche in benachbarten Wänden exakt fluchten zu lassen. Dies kann dadurch erfolgen, dass jedes Mal, wenn ein Mauerdurchbruch mit der Kernbohrmaschine hergestellt wurde, das Senklot auf der Welle befestigt wird und ein Bohrmittelpunkt auf die nächste benachbarte Wand projiziert wird. Unter einer Laservorrichtung ist im Rahmen dieser Anmeldung eine Vorrichtung zu verstehen, welche einen Laserstrahl erzeugt und über eine Batterie verfügt. Beispielsweise kann die Laservorrichtung ein herkömmlicher Laserpointer mit einem Gehäuse sein. Es kann aber auch der Lotkörper als Gehäuse dienen.

Die Erfindung zeichnet sich dadurch aus, dass an der Haltevorrichtung eine Vertiefung mit einem Innengewinde vorgesehen ist, welches Innengewinde mit der Längsachse des Senklotes fluchtet und mit einem an der Welle der Kernbohrmaschine ausgebildeten Aussengewinde zusammenwirken kann. Das Senklot lässt sich daher besonders einfach an der Kernbohrmaschine befestigen, da es genauso wie eine Bohrkrone auf die Welle aufgeschraubt und abgeschraubt werden kann. Nachdem ein Decken- bzw. Bodendurchbruch mit der Kernbohrmaschine gebohrt wurde, kann das Senklot rasch auf die Welle aufgeschraubt werden. Der Laserstrahl strahlt durch den eben gebohrten Durchbruch auf den darunterliegenden Boden und zeigt dort den Mittelpunkt eines weiteren zu bohrenden Durchbruches an. Die beiden hergestellten Durchbrüche liegen exakt auf einer Vertikalen. Eine Steigleitung, welche die Durchbrüche durchdringt, ist daher automatisch vertikal ausgerichtet. Das Herstellen solcher Decken- bzw. Bodendurchbrüche erfolgt daher überraschend einfach und mit sehr geringem Zeitaufwand und liefert äusserst genaue Ergebnisse.

In einer alternativen Ausführungsform der Erfindung ist an der Haltevorrichtung die Vertiefung vorgesehen, in welcher die Welle der Kernbormaschine drehfest aufnehmbar ist, und die Haltevorrichtung hat ein Aussengewinde ausgebildet, welches mit einer an der Welle gehaltenen Überwurfmutter zusammenwirken kann. Weist das Wellenende zur drehfesten Befestigung der Bohrkrone eine Welle mit einer Überwurfmutter auf, so kann das Senklot genauso an dem Wellenende befestigt werden, wie die Bohrkrone.

In einer weiteren bevorzugten Ausführungsform der Erfindung ist das Auspendelmittel durch eine Lotschnur realisiert, deren Enden mit dem zweiten Ende des Lotkörpers bzw. der Haltevorrichtung verbunden sind, wobei die Lotschnur mit der Längsachse des Senklotes fluchtet. Die Lotschnur kann kurz ausgeführt werden, da diese lediglich dem Auspendeln dient. Die Lotschnur muss wieder die Vertikale anzeigen noch muss sie eine derartige Länge besitzen, damit die Spitze des Senklotes einen Punkt an einem Boden markiert. Diese Aufgaben werden von der Laservorrichtung übernommen. Die Lotschnur besitzt eine Länge zwischen 15 und 5 cm und bevorzugt zwischen 10 und 8 cm. Die kurze Lotschnur bietet einen geringen Windwiderstand, wodurch sich der Lotkörper rasch auspendeln kann. Bevorzugt ist die Lotschnur eine Kugelkette.

Als zweckdienlich hat es sich erwiesen, wenn der Lotkörper mit der Haltevorrichtung zusammensteckbar ist und der Lotkörper zum Auspendeln von der Haltevorrichtung getrennt wird, wodurch der Lotkörper von der Lotschnur an der Haltevorrichtung gehalten ist. Das Senklot ist durch seine Zusammensteckbarkeit handlich zu transportieren und ist rasch einsatzbereit, indem der Lotkörper aus der Haltevorrichtung gezogen wird und relativ zu dieser auspendeln kann. Bevorzugt ist es, wenn der Lotkörper kraftschlüssig an der Haltevorrichtung gehalten ist und mit Handkraft von dieser getrennt werden kann.

In einer weiteren bevorzugten Ausführungsform der Erfindung ist das erste Ende des Senklotes als eine Lotspitze ausgebildet und die Laservorrichtung ist in der Lotspitze angeordnet. Die Laservorrichtung wirkt daher wie eine Lotschnur und zeigt exakt den Mittelpunkt der Verlängerung der Lotspitze an.

In einer weiteren besonders bevorzugten Ausführungsform der Erfindung ist das Auspendelmittel dadurch realisiert, dass die Laservorrichtung um eine erste Querachse mit einem ersten Lager verschwenkbar ist, welche erste Querachse senkrecht zu der Längsachse des Senklotes orientiert ist, wobei das erste Lager an einem Pendelring gehalten ist. Zudem ist der Pendelring bevorzugt um eine zweite Querachse mit einem zweiten Lager verschwenkbar, welche zweite Querachse senkrecht zu der ersten Querachse orientiert ist, wobei das zweite Lager an dem Lotkörper gehalten ist. Durch diese Ausgestaltungsform des Auspendelmittels ist die Laservorrichtung in der Ebene senkrecht zur Vertikalen in zwei Richtungen verschwenkbar und pendelt sich daher automatisch in die Vertikale aus. Auf die Haltevorrichtung kann eine Schutzkappe aufgesetzt sein, welche die Laservorrichtung fixiert, wenn das Senklot nicht eingesetzt wird. Durch Abziehen der Schutzkappe ist das Auspendelmittel und somit die Laservorrichtung frei bewegbar.

Zweckmässigerweise umfasst das Senklot eine Ein- bzw. eine Ausschaltvorrichtung, mit welcher die Laservorrichtung einschaltbar ist, wenn das Senklot an der Welle befestigt ist und mit welcher die Laservorrichtung ausschaltbar ist, wenn das Senklot von der Welle abgenommen ist. Diese Ausgestaltungsform trägt dazu dabei, dass die Anwendung des Senklotes sehr benutzerfreundlich ist, da dieses automatisch ein- und ausgeschaltet wird. Denkbar ist es auch, dass die Laservorrichtung dadurch ein- bzw. ausgeschaltet wird, indem der Lotkörper von der Haltevorrichtung abgezogen bzw. auf diese aufgesteckt wird.

Als vorteilhaft erweist es sich, wenn die Ein- bzw. die Ausschaltvorrichtung ein Druccknopf ist, welcher den Stromkreis der Laservorrichtung schliesst und öffnet. Bevorzugt ist der Druckknopf am Grund der Vertiefung angeordnet. Dadurch wird der Druccknopf automatisch gedrückt, wenn das Senklot auf die Welle der Kernbohrmaschine aufgeschraubt bzw. aufgesteckt wird und gelöst, wenn das Senklot von der Welle abgenommen wird.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine erste Schnittdarstellung durch ein Senklot in einer ersten Ausführungsform;
- Figur 2:: eine zweite Schnittdarstellung durch das Senklot aus Figur 1 mit einer Blickrichtung, welche um 90 Grad verdreht zur Ansicht aus der Figur 1 in Bezug zur Längsachse des Senklots ist und
- Figur 3:: eine teilweise geschnittene Seitenansicht einer zweiten Ausführungsform des Laserlots.

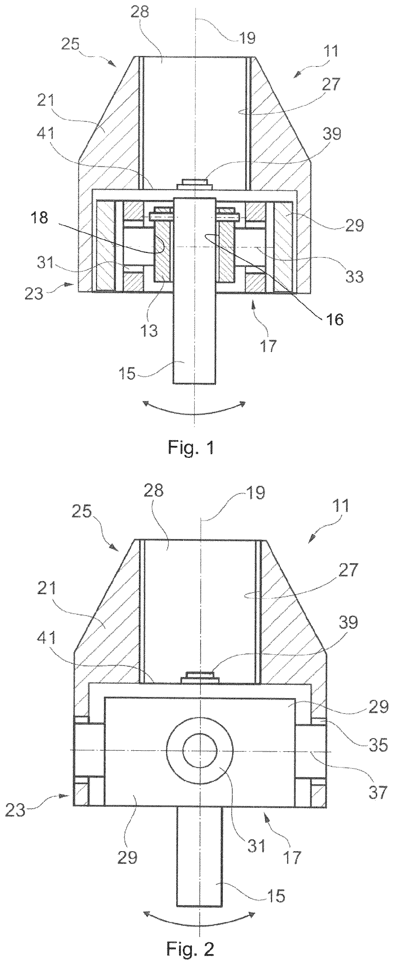

In den Figuren 1 und 2 ist eine erste Ausführungsform des erfindungsgemässen Senklotes gezeigt, welches gesamthaft mit dem Bezugszeichen 11 bezeichnet ist. Das Senklot 11 umfasst einen Lotkörper 13. An dem Lotkörper 13 ist eine Laservorrichtung 15 befestigt. Bevorzugt ist die Laservorrichtung 15 an einem ersten Ende 16 des Lotkörpers 13 befestigt. Die Befestigung der Laservorrichtung 15 an dem Lotkörper kann beispielsweise durch Klemmschrauben erfolgen Die Laservorrichtung 15 projiziert einen farbigen Laserpunkt an einen nächstgelegenen Gegenstand, insbesondere einen Boden eines Gebäudes.

Der Lotkörper 13 ist an einem Auspendelmittel 17 befestigt. Bevorzugt ist das Auspendelmittel 17 an dem zweiten Ende 18 des Lotkörpers 13 befestigt. Die Laservorrichtung 15 und der Lotkörper 13 fluchten mit der Längsachse 19 des Senklotes. Eine erste Ausführungsform des Auspendelmittels 17 ist in den Figuren 1 und 2 gezeigt.

Das Auspendelmittel 17 ist mit einer Haltevorrichtung 21 verbunden. Dadurch kann sich die Laservorrichtung 15 derart auspendeln, dass der Laserstrahl eine Vertikale bildet. Der Austrittspunkt des Laserstrahls und der auf dem nächstgelegenen Gegenstand angezeigte Laserpunkt liegen daher auf einer Vertikalen.

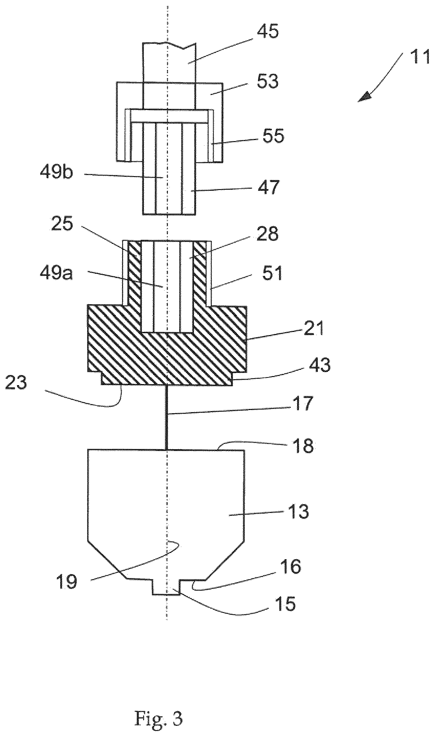

Die Haltevorrichtung 21 weist ein erstes Ende 23 und ein zweites Ende 25 auf. Am ersten Ende 23 ist das Auspendelmittel 17 befestigt. Am zweiten Ende 25 ist ein Innengewinde 27 vorgesehen, welches mit dem Aussengewinde einer Welle (in Figur 3 gezeigt) einer Kernbohrmaschine zusammenwirken kann. Das Innengewinde 27 ist an einer Vertiefung 28 ausgebildet.

Das erfindungsgemässe Senklot 11 hat den Vorteil, dass in überraschend einfacher Weise an zwei übereinanderliegenden Decken bzw. Böden eines Gebäudes ein erster und zweiter Deckendurchgang exakt in einer Vertikalen liegend herstellbar sind.

Dazu wird das Senklot 11 auf die Kernbohrmaschine aufgeschraubt und die Kernbohrmaschine derart justiert, dass der Laser an der Stelle, wo der erste Deckendurchgang vorhanden sein soll, einen ersten Bohrmittelpunkt auf den Boden projiziert. Der erste Deckendurchgang wird mit einer Bohrkrone gebohrt, welche auf die Welle 45 aufgeschraubt ist. Nach Bohren des ersten Deckendurchgangs wird wieder das Senklot auf die Welle 45 der Kernbohrmaschine aufgeschraubt. Die Laservorrichtung 15 kann sich durch das Auspendelmittel 17 auspendeln. Der Laserstrahlt strahlt durch den ersten Deckendurchgang und projiziert einen Laserpunkt auf dem darunterliegenden Boden. Dieser Laserpunkt markiert einen zweiten Bohrmittelpunkt, welcher mit dem Mittelpunkt des ersten Deckendurchgangs exakt auf einer Vertikalen liegt. Nach Bohren des zweiten Deckendurchgangs an der mit dem Senklot markierten Stelle, fluchten der erste und der zweite Deckendurchgang exakt und deren Mittelpunkte liegen exakt auf einer Vertikalen. Eine Steigleitung, welche durch den ersten und den zweiten Deckendurchgang geführt ist, ist daher genau vertikal ausgerichtet.

Die erste Ausführungsform eines Auspendelmittels 17, welche in den Figuren 1 und 2 gezeigt ist, umfasst einen Pendelring 29. Der Lotkörper 13 ist über ein erstes Lager 31 um eine erste Querachse 33 relativ zu dem Pendelring 29 verschwenkbar. Die erste Querachse 33 ist senkrecht bzw. normal zu der Längsachse 19 orientiert. Der Pendelring 19 ist mit einem zweiten Lager 35 an der Haltevorrichtung 21 gehalten. Der Pendelring 19 ist relativ zu der Haltevorrichtung 21 um eine zweite Querachse 37 verschwenkbar. Die zweite Querachse 37 ist senkrecht bzw. normal zu der ersten Querachse 33 orientiert. Die doppelte Verschwenkbarkeit der Laservorrichtung 15 relativ zu der Längsachse 19 ermöglicht es, dass sich die Laservorrichtung automatisch in die Vertikale ausrichtet.

Bevorzugt ist es, wenn das Senklot 11 über eine Ein- bzw. Ausschaltvorrichtung in Gestalt eines Druckknopfes 39 verfügt. Der Druckknopf 39 ist am Grund 41 der Vertiefung 28 positioniert. Wenn das Ende 47 der Welle 45 der Kernbohrmaschine in die Vertiefung 28 eingeschraubt wird, wird der Druckknopf 39 gedrückt. Dadurch wird der Stromkreis der Laservorrichtung 15 geschlossen und diese wird eingeschaltet. Beim Abschrauben des Senklotes 11 von dem Ende 47 wird die Laservorrichtung 15 wieder ausgeschaltet. Der Druckknopf 39 ermöglicht daher ein automatisches Ein- und Ausschalten der Laservorrichtung 15.

Eine zweite Ausführungsform des Auspendelmittels (Figur 3) ist über eine Lotschnur 17 realisiert. Die Enden der Lotschnur 17 sind mit dem zweiten Ende 18 des Lotkörpers und dem ersten Ende 23 verbunden. Der Lotkörper 13 bzw. die Laservorrichtung kann an der Lotschnur hängend auspendeln, damit der Laserstrahl in vertikaler Richtung ausgerichtet wird. Der Lotkörper 13 kann in die Haltervorrichtung 21 einsteckbar sein. Bevorzugt ist es, wenn der Lotkörper 13 kraftschlüssig an der Haltevorrichtung 21 gehalten ist. Durch Abziehen des Lotkörpers 13 von der Haltevorrichtung 21 hängt die Haltevorrichtung 21 an der Lotschnur 17 und kann sich in die Vertikale ausrichten. Bei dieser zweiten Ausführungsform hat der Lotkörper 13 bevorzugt eine Lotspitze ausgebildet, in welcher die Laservorrichtung 15 bzw. der Austritt des Laserstrahls angeordnet ist.

Der Lotkörper 13 lässt sich auf die Haltevorrichtung 21 aufstecken. Dazu kann an der Haltevorrichtung 21 ein Absatz 43 ausgebildet sein, an welchem der Lotkörper 13 lösbar gehalten ist. Der Absatz 43 kann auch an dem Lotkörper ausgebildet sein. Die Haltevorrichtung 21 und der Lotkörper sind daher zusammensteckbar. In dieser Position lässt sich das Senklot an der Welle 45 der Kernbohrmaschine befestigen. Zum Auspendeln des Lotkörpers 13 wird dieser von der Haltevorrichtung 21 gelöst und hängt an der Lotschnur 17. Die Lotschnur 17 kann auch eine Lotkette sein.

Die Vertiefung 28 kann auch einen nicht rotationsymmetrischen Querschnitt aufweisen, in welchem das Ende 47 der Welle 45 drehfest aufnehmbar ist. Beispielsweise können das Ende 47 der Welle und die Vertiefung 28 eine erste bzw. zweite Anschlagfläche 49a,49b besitzen, welche zusammenwirken, indem sie aneinander anliegen.

Zur vertikalen Halterung ist an der Haltevorrichtung 21 ein Aussengewinde 51 ausgebildet. Auf das Aussengewinde 51 lässt sich eine an der Welle 45 gehaltene Überwurfmutter 53 mit einem Innengewinde 55 aufschrauben.

Die unterschiedlichen Auspendelmittel 17 können beliebig mit unterschiedlichen Haltevorrichtungen kombiniert werden.

Die Haltevorrichtung 21 ist an dem Wellenende 47 befestigbar, an welches ansonsten eine Bohrkrone befestigbar ist, ohne dass das Wellenende 47 an die Haltevorrichtung angepasst werden müsste.

### Legende:

- 11: Senklot
- 13: Lotkörper
- 15: Laservorrichtung
- 16: Erstes Ende des Lotkörpers
- 17: Auspendelmittel, Lotschnur
- 18: Zweite Ende des Lotkörpers
- 19: Längsachse
- 21: Haltevorrichtung
- 23: Erstes Ende der Haltevorrichtung
- 25: Zweites Ende der Haltevorrichtung
- 27: Innengewinde
- 28: Vertiefung
- 29: Pendelring
- 31: Erstes Lager
- 33: Erste Querachse
- 35: Zweites Lager
- 37: Zweite Querachse
- 39: Druckknopf
- 41: Grund der Vertiefung
- 43: Absatz
- 45: Welle der Kernbohrmaschine
- 47: Ende der Welle
- 49a,49b: Erste und zweite Anschlagfläche
- 51: Aussengewinde
- 53: Überwurfmutter
- 55: Innengewinde

## Patentansprüche

1. Senklot (11) zur Ausrichtung einer eine Welle (45) und eine Bohrkrone aufweisende Kernbohrmaschine umfassend
- einen Lotkörper (13) mit einem ersten Ende (16) und einem dem ersten Ende (16) gegenüberliegenden zweiten Ende (18),
- ein an dem zweiten Ende (18) befestigtes Auspendelmittel (17) und
- eine Laservorrichtung (15), welche an dem ersten Ende (16) angeordnet ist und mit der Längsachse (19) des Lotkörpers (13) fluchtet,
wobei das Senklot (11) eine Haltevorrichtung (21) umfasst, welche Haltevorrichtung (21) mit dem Auspendelmittel (17) verbunden ist und mit welcher Haltevorrichtung (21) das Senklot (11) an der Welle (45) der Kernbohrmaschine anstatt der Bohrkrone befestigbar ist,
**dadurch gekennzeichnet,**
**dass** an der Haltevorrichtung (21) eine Vertiefung (28) mit einem Innengewinde (27) vorgesehen ist, welches Innengewinde (27) mit der Längsachse (19) des Senklotes (11) fluchtet und mit einem an der Welle (45) der Kernbohrmaschine ausgebildeten Aussengewinde zusammenwirken kann oder
**dass** an der Haltevorrichtung die Vertiefung (28) vorgesehen ist, in welcher die Welle (45) der Kernbormaschine drehfest aufnehmbar ist und die Haltevorrichtung (21) ein Aussengewinde (51) ausgebildet hat, welches mit einer an der Welle (45) gehaltenen Überwurfmutter (53) zusammenwirken kann.

2. Senklot nach Anspruch 1, **dadurch gekennzeichnet, dass** das Auspendelmittel durch eine Lotschnur (17) realisiert ist, deren Enden mit dem zweiten Ende (18) des Lotkörpers (13) bzw. der Haltevorrichtung (21) verbunden sind, wobei die Lotschnur mit der Längsachse (19) des Senklotes (11) fluchtet.

3. Senklot nach Anspruch 2, **dadurch gekennzeichnet, dass** der Lotkörper (13) mit der Haltevorrichtung (21) zusammensteckbar ist und der Lotkörper (13) zum Auspendeln von der Haltevorrichtung (21) getrennt wird, wodurch der Lotkörper (13) von der Lotschnur (17) an der Haltevorrichtung (21) gehalten ist.

4. Senklot nach einem der vorangehenden Ansprüche, **dadurch gekennzeichnet, dass** das erste Ende (16) des Senklotes (11) als eine Lotspitze ausgebildet ist und die Laservorrichtung (15) in der Lotspitze angeordnet ist.

5. Senklot nach Anspruch 1, **dadurch gekennzeichnet, dass** das Auspendelmittel (17) dadurch realisiert ist, dass die Laservorrichtung um eine erste Querachse (33) mit einem ersten Lager (31) verschwenkbar ist, welche erste Querachse (33) senkrecht zu der Längsachse (19) des Senklotes (11) orientiert ist, wobei das erste Lager (31) an einem Pendelring (29) gehalten ist und der Pendelring (29) um eine zweite Querachse (37) mit einem zweiten Lager (35) verschwenkbar ist, welche zweite Querachse (37) senkrecht zu der ersten Querachse (33) orientiert ist, wobei das zweite Lager (35) an dem Lotkörper (13) gehalten ist.

6. Senklot nach einem der vorangehenden Ansprüche, **dadurch gekennzeichnet, dass** das Senklot (11) eine Ein- bzw. eine Ausschaltvorrichtung (39) umfasst, mit welcher die Laservorrichtung (15) einschaltbar ist, wenn das Senklot (11) an der Welle (45) befestigt ist und mit welcher die Laservorrichtung (15) ausschaltbar ist, wenn das Senklot (11) von der Welle (45) abgenommen ist.

7. Senklot nach Anspruch 6, **dadurch gekennzeichnet, dass** die Ein- bzw. die Ausschaltvorrichtung ein Druckknopf (39) ist, welcher den Stromkreis der Laservorrichtung (15) schliesst und öffnet.

## Claims

1. Plumb bob (11) for the alignment of a core drill including a shaft (45) and a drill bit comprising:
- a plumb body (13) with a first end (16) and a second end (18) opposed to the first end (16),
- a pendulum means (17) fixed to the second end (18) and
- a laser device (15) that is arranged at the first end (16) and that is aligned with the longitudinal axis (19) of the plumb body (13),
wherein the plumb line (11) comprises a holding device (21), which holding device (21) is connected to the pendulum means (17) and with which holding device (21) the plumb line (11) can be fixed to the shaft (45) of the core drill instead of the drill bit,
**characterized in**
**that** a recess (28) with an inner thread (27) is provided on the holding device (21), which inner thread (27) is aligned with the longitudinal axis (19) of the plumb bob (11) and that can cooperate with an outer thread configured on the shaft (45) of the core drill or
**that** the recess (28) is provided on the holding device, recess in which the shaft (45) of the core drill can be non-rotatably received and the holding device (21) has an outer thread (51) that can cooperate with an union nut (53) held on the shaft (45).

2. Plumb bob according to claim 1, **characterized in that** the pendulum means is realized by a plumb line (17), the ends of which are connected to the second end (18) of the plumb body (13) or of the holding device (21), wherein the plumb line is aligned with the longitudinal axis (19) of the plumb bob (11).

3. Plumb bob according to claim 2, **characterized in that** the plumb body (13) can be fitted together with the holding device (21) and the plumb body (13) is separated from the holding device (21) for swinging out so that the plumb body (13) is held by the plumb line (17) on the holding device (21).

4. Plumb bob according to one of the preceding claims, **characterized in that** the first end (16) of the plumb bob (11) is configured as a plumb point and the laser device (15) is arranged in the plumb point.

5. Plumb bob according to claim 1, **characterized in that** the pendulum means (17) is realized **in that** the laser device is pivotable about a first transverse axis (33) with a first bearing (31), which first transverse axis (33) is oriented perpendicularly to the longitudinal axis (19) of the plumb bob (11), wherein the first bearing (31) is held on a pendulum ring (29) and the pendulum ring (29) is pivotable about a second transverse axis (37) with a second bearing (35), which second transverse axis (37) is oriented perpendicularly to the first transverse axis, wherein the second bearing (35) is held on the plumb body.

6. Plumb bob according to one of the preceding claims, **characterized in that** the plumb bob (11) comprises an activating and deactivating device (39) with which the laser device (15) can be activated, when the plumb bob (11) is fixed on the shaft (45) and with which the laser device (15) can be deactivated when the plumb bob (11) is removed from the shaft (45).

7. Plumb bob according to claim 6, **characterized in that** the activating and deactivating device is a push button (39) that closes and opens the electric circuit of the laser device (15).

## Revendications

1. Fil à plomb (11) pour l'alignement d'une carotteuse qui présente un arbre (45) et un foret qui comprend :
- un corps de fil à plomb (13) avec une première extrémité (16) et une seconde extrémité (18) opposée à la première extrémité (16),
- un organe de pendule (17) fixé à la seconde extrémité (18) et
- un dispositif laser (15) qui est placé à la première extrémité (16) et qui est aligné avec l'axe longitudinal (19) du corps de fil à plomb (13),
cependant que le fil à plomb (11) comprend un dispositif de retenue (21), lequel dispositif de retenue (21) est relié à l'organe de pendule (17) et dispositif de retenue (21) avec lequel le fil à plomb (11) peut être fixé à l'arbre (45) de la carotteuse à la place du foret,
**caractérisé en ce**
**qu'**un évidement (28) avec un filet intérieur (27) est prévu sur le dispositif de maintien (21), filet intérieur (27) qui est aligné avec l'axe longitudinal (19) du fil à plomb (11) et qui peut coopérer avec un filet extérieur configuré sur l'arbre (4%) de la carotteuse ou
**que** l'évidement (28) est prévu sur le dispositif de maintien, évidement dans lequel l'arbre (45) de la carotteuse peut être logé de manière solidaire en rotation et un filet extérieur (51) qui peut coopérer avec un écrou-raccord (53) maintenu sur l'arbre (45) est configuré sur le dispositif de maintien (21).

2. Fil à plomb selon la revendication 1, **caractérisé en ce que** l'organe de pendule est réalisé par un fil (17) dont les extrémités sont reliées à la seconde extrémité (18) du corps de fil à plomb (13) ou du dispositif de maintien (21), le fil lesté étant aligné avec l'axe longitudinal (19) du fil à plomb (11).

3. Fil à plomb selon la revendication 2, **caractérisé en ce que** le corps de fil à plomb (13) peut être emboîté avec le dispositif de maintien (21) et le corps de fil à plomb (13) est séparé du dispositif de maintien (21) pour le mouvement pendulaire si bien que le corps de fil à plomb (13) est maintenu sur le dispositif de maintien (21) par le fil (17).

4. Fil à plomb selon l'une des revendications précédentes, **caractérisé en ce que** la première extrémité (16) du fil à plomb (11) est configuré comme une pointe de fil à plomb et le dispositif laser (15) est placé dans la pointe de fil à plomb.

5. Fil à plomb selon la revendication 1, **caractérisé en ce que** l'organe de pendule est réalisé **en ce que** le dispositif laser peut pivoter autour d'un premier axe transversal (33) avec un premier palier (31), lequel premier axe transversal (33) est orienté perpendiculairement à l'axe longitudinal (19) du fil à plomb (11), cependant que le premier palier (31) est maintenu à un anneau de pendule (29) et l'anneau de pendule (29) est pivotant autour d'un second axe transversal (37) avec un second palier (35), lequel second axe transversal (37) est orienté perpendiculairement au premier axe transversale (33), cependant que le second palier (35) est maintenu sur le corps de fil à plomb (13).

6. Fil à plomb selon l'une des revendications précédentes, **caractérisé en ce que** le fil à plomb (11) comprend un dispositif d'activation et de désactivation (39) avec lequel le dispositif laser (15) peut être activé lorsque le fil à plomb (11) est fixé à l'arbre (45) et avec lequel le dispositif laser (15) est désactivé lorsque le fil à plomb (11) est enlevé de l'arbre (45).

7. Fil à plomb selon la revendication 6, **caractérisé en ce que** le dispositif d'activation et de désactivation est un bouton poussoir (39) qui ferme et ouvre le circuit électrique du dispositif laser (15).
